(19) **Europäisches Patentamt / European Patent Office / Office européen des brevets**

(11) **EP 1 280 286 B1**

(12) **FASCICULE DE BREVET EUROPEEN**

(45) Date de publication et mention
de la délivrance du brevet:
**18.06.2008 Bulletin 2008/25**

(51) Int Cl.:
***H04B 7/06*** *(2006.01)*

(21) Numéro de dépôt: **02291848.6**

(22) Date de dépôt: **22.07.2002**

(54) **Station radio à diversité d'émission en boucle fermée, et procédé de contrôle d'émission d'une telle station**

Funkstation mit Sendediversität in geschlossener Schleife und Verfahren zur Senderegelung einer solchen Station

Closed-loop transmission diversity radio station and transmission control method for such a station

(84) Etats contractants désignés:
**AT BE BG CH CY CZ DE DK EE ES FI FR GB GR IE IT LI LU MC NL PT SE SK TR**

(30) Priorité: **25.07.2001 FR 0109928**

(43) Date de publication de la demande:
**29.01.2003 Bulletin 2003/05**

(73) Titulaire: **Alcatel Lucent**
**75008 Paris (FR)**

(72) Inventeur: **El Nahas El Homsi, Hassan**
**75015 Paris (FR)**

(74) Mandataire: **Ameline, Jean-Paul B.C.**
**Alcatel-Lucent**
**Intellectual Property & Standards**
**54, rue La Boétie**
**75008 Paris (FR)**

(56) Documents cités:
**EP-A- 1 117 197**          **WO-A-01/35548**
**US-A- 6 067 324**

• **RAGHOTHAMAN B ET AL: "TRANSMIT ADAPTIVE ARRAY WITHOUT USER-SPECIFIC PILOT FOR 3G CDMA" 2000 IEEE INTERNATIONAL CONFERENCE ON ACOUSTICS, SPEECH, AND SIGNAL PROCESSING. PROCEEDINGS. (ICASSP). ISTANBUL, TURKEY, JUNE 5-9, 2000, IEEE INTERNATIONAL CONFERENCE ON ACOUSTICS, SPEECH, AND SIGNAL PROCESSING (ICASSP), NEW YORK, NY: IEEE, US, vol. 5 OF 6, 5 juin 2000 (2000-06-05), pages 3009-3012, XP001035819 ISBN: 0-7803-6294-2**

Printed by Jouve, 75001 PARIS (FR)

**Description**

La présente invention concerne les méthodes de diversité d'émission utilisées dans certains systèmes de radiocommunication.

Dans ces méthodes, un même signal radio est émis dans des conditions différentes par plusieurs antennes de la station émettrice, ce qui améliore la détection du signal par le récepteur, notamment en la rendant moins sensible aux évanouissements de canal. Il en résulte une meilleure efficacité spectrale du système.

L'invention est plus particulièrement concernée par les méthodes de diversité d'émission dites en boucle fermée, dans lesquelles les paramètres d'émission du signal sur les différentes antennes sont déterminés à partir de données de rétroaction retournées par la station réceptrice distante et dépendant de la qualité de réception des ondes radio. En général, ces données de rétroaction sont calculées à partir des réponses impulsionnelles estimées correspondant aux canaux de propagation relatifs aux différentes antennes. La station émettrice applique alors un déphasage à chaque antenne, de telle sorte que les signaux des différentes antennes parviennent à la station réceptrice approximativement en phase.

La diversité d'émission en boucle fermée offre un gain significatif, à condition que les données de rétroaction soient remontées et appliquées assez rapidement. Ceci suppose que les variations des canaux de propagation ne soient pas trop rapides.

Une telle méthode de diversité d'émission en boucle fermée est notamment prévue dans les réseaux cellulaires de troisième génération de type UMTS (« Universal Terrestrial Telecommunications System »). Une description détaillée en est donnée dans la section 7 de la spécification technique 3G TS 25.214, « Physical layer procedures (FDD) - Release 1999 », version 3.6.0, publiée en mars 2001 par le 3GPP (« 3rd Generation Partnership Project »).

Une station de base d'un tel réseau peut posséder deux antennes pour une même cellule, par lesquelles elle diffuse respectivement deux signaux de balise distincts sur des canaux communs appelés CPICH (« Common Pilot Channel »). Lorsque la diversité d'émission en boucle fermée est activée pour un terminal mobile en communication dans la cellule, celui-ci détecte les réponses impulsionnelles $h_0$, $h_1$ propres aux deux antennes sur la base de ces signaux de balise connus a priori, et détermine un vecteur normalisé optimal g qui maximise la quantité $g^H.K.g$, où K est la matrice de covariance des réponses impulsionnelles, de la forme $K = \begin{bmatrix} h_0^H.h_0 & h_0^H.h_1 \\ h_1^H.h_0 & h_1^H.h_1 \end{bmatrix}$, $(.)^H$ désignant le

transposé conjugué. La direction de ce vecteur optimal g est indiquée à la station de base dans un canal de signalisation montant. La station de base applique des coefficients de pondération correspondants (phase et/ou amplitude) pour l'émission par les deux antennes des signaux dédiés destinés au terminal mobile en question.

En principe, le gain procuré par une telle méthode de diversité d'émission en boucle fermée peut être accru en équipant les stations de base de plus de deux antennes d'émission et en prévoyant un nombre correspondant de signaux de balise pour l'estimation des réponses impulsionnelles par les mobiles. Toutefois, la multiplication des signaux de balise peut être indésirable car elle augmente le niveau général d'interférence étant donné que ces signaux de balise sont émis à relativement forte puissance pour être détectés de façon fiable dans toute la cellule.

De plus, un opérateur cellulaire ne peut pas étendre de cette façon la méthode à de plus de deux antennes si les terminaux mobiles et l'interface de signalisation radio ne sont pas modifiés en conséquence. Or une telle modification échappe généralement au contrôle de l'opérateur.

Un but de la présente invention est de permettre malgré tout de mettre en oeuvre une méthode de diversité d'émission en boucle fermée avec N > M antennes d'émission lorsque les stations destinataires ne prennent en compte que M signaux de balise.

L'invention propose ainsi un procédé de contrôle d'émission d'une première station radio ayant N antennes d'émission vers une seconde station radio, N étant un nombre plus grand que 2, comprenant les étapes suivantes :

- diffuser M signaux de balise depuis la première station, M étant un nombre plus grand que 1 et plus petit que N, chaque signal de balise étant associé à un vecteur de répartition à N composantes et étant appliqué à chacune des N antennes après pondération par une composante correspondante du vecteur de répartition associé ;
- évaluer la réception des M signaux de balise par la seconde station, pour déterminer des données de rétroaction communiquées à la première station ;
- faire varier dans le temps les vecteurs de répartition associés aux M signaux de balise ;
- traiter les données de rétroaction successivement reçues par la première station pour déterminer un coefficient de pondération respectif pour chacune des N antennes ; et
- émettre un signal radio dédié depuis la première station à destination de la seconde station, ledit signal dédié étant appliqué à chacune des N antennes d'émission après pondération par le coefficient déterminé pour ladite antenne.

La première station répartit les M signaux de balise sur les N antennes et en fait varier dans le temps cette répartition. Ce processus est transparent pour la seconde station qui se comporte comme si la première station n'avait que M antennes, en évaluant M réponses impulsionnelles et en retournant des données de rétroaction correspondantes. Lorsque la répartition varie, la première station récupère des informations sur des combinaisons différentes des canaux pilotes qui, au bout d'un certain nombre de combinaisons, lui permettent d'avoir une idée des coefficients de pondération optimaux à appliquer aux N antennes.

En particulier, le traitement des données de rétroaction peut comprendre une estimation d'une matrice à N lignes et N colonnes à partir de données de rétroaction obtenues pour plusieurs combinaisons de vecteurs de répartition, le terme situé à la (i+1)-ième et à la (j+1)-ième colonne de ladite matrice, pour $0 \leq i < N$ et $0 \leq j < N$, étant proportionnel

à $h_j'^H . h_i'$, où $h_i'$ désigne une réponse impulsionnelle d'un canal de propagation entre la (i+1)-ième antenne d'émission de la première station et la seconde station. Le traitement peut se poursuivre par un calcul d'un vecteur propre correspondant à une valeur propre de module maximal de ladite matrice à N lignes et N colonnes, les coefficients de pondération respectifs pour les N antennes étant proportionnels aux composantes dudit vecteur propre.

Dans la généralité du procédé, les vecteurs de répartition peuvent être quelconques. Il est cependant commode de prévoir que chaque vecteur de répartition associé à un signal de balise ait une seule composante non nulle, ce qui revient à effectuer une rotation des signaux de balise sur les antennes d'émission.

Un autre aspect de la présente invention se rapporte à une station radio à diversité d'émission en boucle fermée, comprenant N antennes d'émission, des moyens de diffusion de M signaux de balise, et des moyens d'émission d'au moins un signal radio dédié à destination d'une station radio distante respective, avec $1 < M < N$. Les moyens de diffusion comprennent des moyens pour associer chacun des M signaux de balise à un vecteur de répartition respectif à N composantes, des moyens pour appliquer chacun des M signaux de balise à chacune des N antennes après pondération par une composante correspondante du vecteur de répartition associé, et des moyens pour faire varier dans le temps les vecteurs de répartition associés aux M signaux de balise. Les moyens d'émission du signal radio dédié à destination d'une station radio distante comprennent des moyens de traitement de données de rétroaction reçues de ladite station distante pour déterminer un coefficient de pondération respectif pour chacune des N antennes, et des moyens pour appliquer ledit signal dédié à chacune des N antennes d'émission après pondération par le coefficient déterminé pour ladite antenne. Les moyens de traitement sont agencés pour déterminer les coefficients de pondération respectifs pour les N antennes sur la base de données de rétroaction successivement reçues pour des combinaisons différentes de vecteurs de répartition.

D'autres particularités et avantages de la présente invention apparaîtront dans la description ci-après d'exemples de réalisation non limitatifs, en référence aux dessins annexés, dans lesquels :

- la figure 1 est un schéma synoptique d'un exemple de station de base selon l'invention ; et
- la figure 2 est un schéma synoptique d'un terminal mobile coopérant avec une telle station de base.

L'invention est décrite ci-après dans un exemple d'application à un réseau cellulaire UMTS dans le cas particulier où N = 4 et M = 2.

Les réseaux UMTS utilisent une technique à large bande d'accès multiple avec répartition par codes (W-CDMA, « Wideband Code Division Multiple Access »). Les symboles transmis sont multipliés par des codes d'étalement constitués d'échantillons appelés « chips » dont la cadence (3,84 Mchip/s dans le cas de l'UMTS) est supérieure à celle des symboles transmis. Les codes d'étalement distinguent différents canaux physiques qui sont superposés sur la même ressource de transmission constituée par une fréquence porteuse. Les propriétés d'auto- et d'intercorrélation des codes d'étalement permettent au récepteur de séparer les canaux physiques et d'extraire les symboles qui lui sont destinés.

Pour l'UMTS en mode FDD (« Frequency Division Duplex ») sur la liaison descendante, un code de brouillage (« scrambling code ») est alloué à chaque émetteur-récepteur correspondant à une cellule desservie par une station de base, et différents canaux physiques dans cette cellule sont distingués par des codes de canal (« channelization codes ») mutuellement orthogonaux. L'émetteur-récepteur peut aussi utiliser plusieurs codes de brouillage mutuellement orthogonaux, l'un d'entre eux étant un code de brouillage primaire. Sur la liaison montante, l'émetteur-récepteur utilise le code de brouillage pour séparer les terminaux mobiles émetteurs, et éventuellement le code de canal pour séparer les canaux physiques issus d'un même terminal. Pour chaque canal physique, le code d'étalement global est le produit du code de canal et du code de brouillage. Le facteur d'étalement (égal au rapport entre la cadence des chips et la cadence des symboles) est une puissance de 2 comprise entre 4 et 512. Ce facteur est choisi en fonction du débit de symboles à transmettre sur le canal.

Les canaux physiques comprennent des canaux dédiés (DPCH, « Dedicated Physical Channel ») et des canaux communs.

Dans le sens descendant, les canaux communs comprennent des canaux pilotes (CPICH) sur lesquels sont transmis des signaux de balise. Ces signaux de balise permettent aux terminaux mobiles de sélectionner l'émetteur-récepteur avec lequel la liaison radio est de la meilleure qualité. Dans le cas où la diversité d'émission en boucle fermée est mise en oeuvre sur la liaison descendante, les canaux pilotes permettent aussi aux terminaux mobiles de déterminer l'information de rétroaction à retourner à la station de base.

La structure du signal de balise émis sur un CPICH est décrite dans la section 5.3.1. de la spécification technique 3G TS 25.211, version 3.3.0, « Physical Channels and Mapping of Transport Channels onto Physical Channels (FDD) - Release 1999 », publiée en juin 2000 par le 3GPP. Le CPICH primaire possède un code de canal constant égal à 1 et un facteur d'étalement égal à 256.

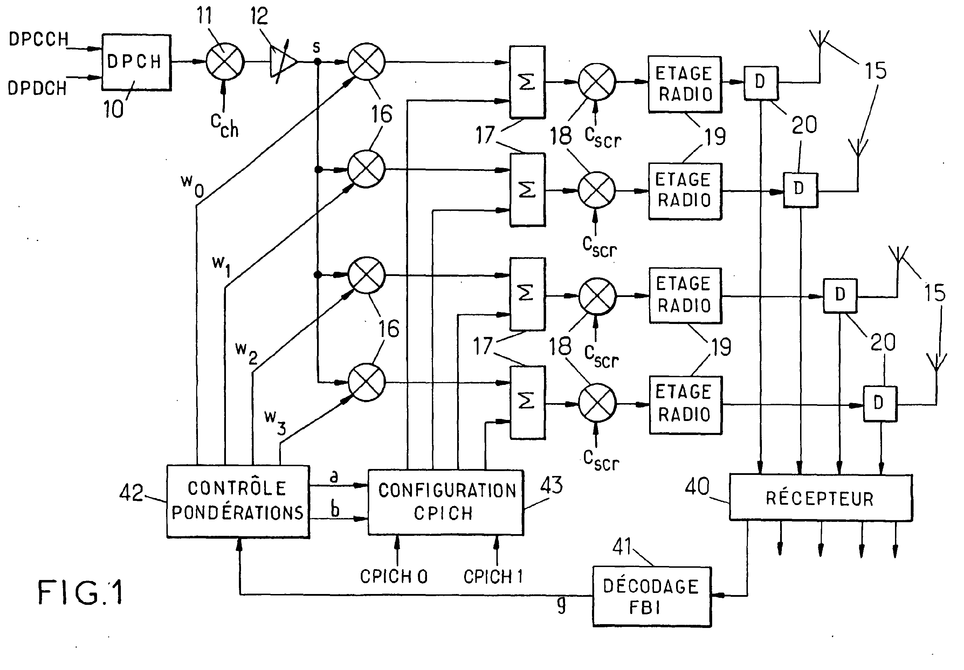

Lorsque la diversité d'émission est mise en oeuvre, le CPICH primaire porte deux signaux de balise notés CPICH0 et CPICH1 sur la figure 1. Le signal de balise CPICH0 est composé de symboles complexes constants égaux à 1+j. Le signal de balise CPICH1 est composé d'une succession de paires de symboles complexes alternativement égaux à 1+j et à -1-j. Ces deux signaux sont donc orthogonaux si on les observe sur une durée couvrant suffisamment de symboles.

Sur la figure 1, la référence 10 désigne un module qui assemble le signal numérique d'un DPCH destiné à un terminal mobile donné à partir des symboles d'un sous-canal de données (DPDCH, « Dedicated Physical Data Channel ») et d'un sous-canal de contrôle (DPCCH, « Dedicated Physical Control Channel »). La séquence de symboles complexes issue du module 10 est modulée par le code de canal $c_{ch}$ alloué au DPCH au moyen d'un multiplieur 11. Un amplificateur à gain réglable 12 multiplie la sortie du multiplieur 11 par un facteur de puissance, déterminé de façon connue en soi par une procédure de contrôle de puissance. Le signal complexe résultant s, qui constitue la contribution du DPCH au signal émis dans la cellule par la station de base, est distribué sur N = 4 voies pour être émis par l'intermédiaire des quatre antennes 15 de la station de base.

Sur chaque voie i ($0 \leq i < N$), un multiplieur complexe 16 pondère le signal dédié s par un coefficient $w_i$. Le signal pondéré est appliqué à une entrée d'un sommateur 17 qui additionne les contributions des différents canaux destinées à l'antenne 15 de la voie. Ces contributions comprennent celles des autres DPCH (non représentés), ainsi que les contributions des canaux communs, en particulier du CPICH. Un autre multiplieur 18 module le la sortie du sommateur 17 par le code de brouillage $c_{scr}$ de la cellule. Chacune des N = 4 voies comporte en outre un étage radio 19 qui assure les opérations classiques de filtrage, de conversion en analogique, de transposition sur la fréquence radio et d'amplification. Le signal radio résultant est appliqué à l'antenne 15 de la voie par l'intermédiaire du duplexeur 20.

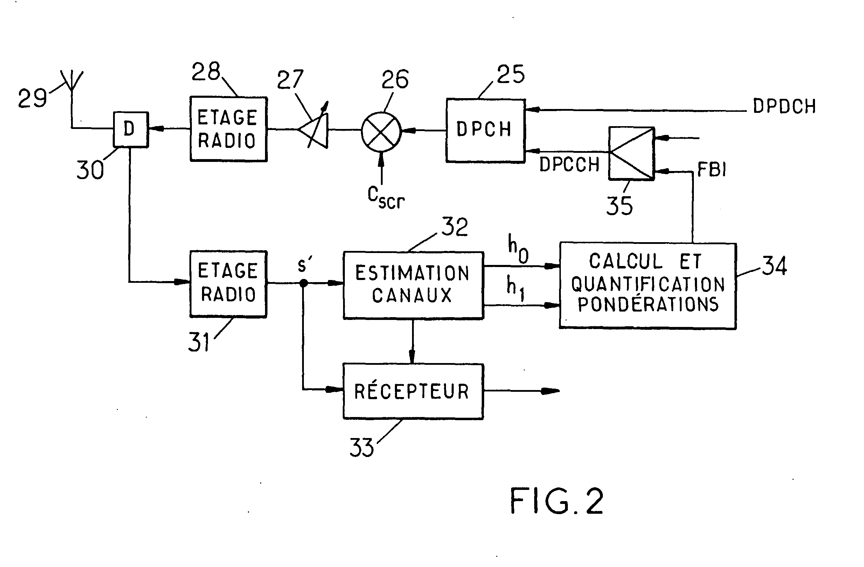

La figure 2 montre la partie émission d'un terminal mobile UMTS émettant selon un seul DPCH. Le module 25 assemble le signal numérique complexe relatif à ce DPCH à partir des symboles fournis sur les sous-canaux de données DPDCH et de contrôle DPCCH. Ce signal numérique est modulé par un code de brouillage $c_{scr}$ au moyen du multiplieur 26. L'amplificateur 27 applique le gain déterminé par la procédure de contrôle de puissance sur la liaison montante, et l'étage radio 28 met en forme le signal radio fourni à l'antenne 29 du terminal par l'intermédiaire du duplexeur 30.

Dans le sens de la réception, le terminal mobile a un étage radio 31 qui assure les traitements d'amplification, de transposition de fréquence, de filtrage et de numérisation pour former un signal en bande de base s' à partir du signal radio capté par l'antenne 29. Le signal en bande de base s' est sondé par un module 32 servant à estimer les réponses impulsionnelles des canaux descendants pertinents pour le terminal mobile. Ces réponses impulsionnelles estimées permettent au récepteur 33, qui peut être classiquement de type « rake », de récupérer les signaux destinés au terminal mobile.

Pour estimer une réponse impulsionnelle, le module de sondage 32 comporte, de façon classique, un filtre adapté au code d'étalement du canal considéré (produit du code de canal et du code de brouillage). Pendant la réception d'un symbole pilote, connu a priori du terminal mobile, la sortie de ce filtre adapté est multipliée par le complexe conjugué de ce symbole pilote, ce qui produit une observation de la réponse impulsionnelle, représentée par un vecteur de dimension L, où L est la longueur considérée pour les réponses impulsionnelles, exprimée en nombre de chips. L'estimation est obtenue en moyennant ces observations sur quelques dizaines de symboles pilotes. Dans le cas des canaux dédiés, les symboles pilotes font partie du DPCCH.

Pour les CPICH, les signaux transmis ne se composent que de symboles pilotes. Lorsque le mode de diversité d'émission en boucle fermée est activé dans une cellule pour le terminal mobile, l'orthogonalité des signaux de balise CPICH0 et CPICH1 permet au module 32 du terminal d'estimer séparément le vecteur de réponse impulsionnelle $h_0$ correspondant au signal CPICH0 et le vecteur de réponse impulsionnelle $h_1$ correspondant au signal CPICH1.

A partir de ces M = 2 réponses impulsionnelles estimées $h_0$, $h_1$, un module 34 calcule le vecteur de pondération normalisé g qui maximise la quantité $g^H.K.g$, où K est la matrice de covariance des réponses impulsionnelles, donnée

par $K = \begin{bmatrix} h_0^H.h_0 & h_0^H.h_1 \\ h_1^H.h_0 & h_1^H.h_1 \end{bmatrix}$. Ce vecteur g correspond au vecteur propre normalisé de la matrice K qui est associée à sa valeur propre de plus grand module. Le module 34 n'effectue pas nécessairement la diagonalisation de la matrice K, compte tenu de la quantification dont fait l'objet le vecteur g. Dans l'état actuel de la norme (voir spécification 3G TS 25.214 précitée), cette quantification est réalisée sur quatre bits, de sorte qu'il suffit au module 34 de tester seize possibilités pour le vecteur g quantifié, et de sélectionner celle qui maximise quantité $g^H.K.g$.

Les bits de quantification du vecteur g sont fournis à un module 35 pour être insérés dans les champs FBI (« Feedback Information ») du sous-canal montant DPCCH. Le sous-champ D du champ FBI, qui occupe un bit toutes les tranches temporelles de 666 $\mu$s, sert à transmettre ces bits de quantification (voir section 5.2.1 de la spécification technique 3G TS 25.211 précitée). Le temps nécessaire pour remonter les données de rétroaction, décrivant un vecteur g sélectionné par le module 34, est donc de 2,666 ms.

Revenant à la figure 1, la partie réception 40 de l'émetteur-récepteur de la station de base détecte les signaux transmis sur les différents canaux montants, et en particulier fournit à un module 41 les bits successifs du sous-champ FBI-D du DPCCH montant. Le module 41 décode les bits FBI pour obtenir les vecteurs de pondération quantifiés g de dimension M = 2 successivement déterminés au niveau du terminal mobile.

La station de base a un module de contrôle des pondérations 42 qui traite les vecteurs g successifs récupérés par le décodeur 41 pour calculer les coefficients de pondération complexes $w_0$-$w_3$ respectivement destinés à l'émission du signal dédié s par l'intermédiaire des N = 4 antennes 15. Le module 42 fait également varier la répartition des M = 2 signaux de balise CPICH0, CPICH1 en commandant un module 43 de configuration du CPICH.

Pour cela, le module de contrôle fournit au module de configuration M vecteurs de répartition de dimension N, respectivement associés aux M signaux de balise. Dans le cas considéré où M = 2, le vecteur de répartition $a = \begin{bmatrix} a_0 \\ a_1 \\ a_2 \\ a_3 \end{bmatrix}$

est associé au signal CPICH0, et le vecteur de répartition $b = \begin{bmatrix} b_0 \\ b_1 \\ b_2 \\ b_3 \end{bmatrix}$ est associé au signal CPICH1, de telle sorte que la contribution du CPICH envoyée par le module de configuration 43 au sommateur 17 de la voie i soit égale à P. $(a_i.CPICH0 + b_i.CPICH1)$, où P est un gain déterminé par la puissance d'émission requise sur le CPICH.

Le module de contrôle 42 fait varier dans le temps les vecteurs a et b, en les modifiant par exemple tous les 10 à 30 ms. Il traite ensuite les vecteurs g récupérés pour les différentes combinaisons (a, b) afin d'évaluer les coefficients de pondération optimaux $w_i$.

Ces coefficients $w_i$ sont les composantes du vecteur propre normalisé $W = \begin{bmatrix} w_0 \\ w_1 \\ w_2 \\ w_3 \end{bmatrix}$ associé à la valeur propre de module maximal de la matrice de covariance $K = H'^H.H' = \begin{bmatrix} k'_{00} & k'_{01} & k'_{02} & k'_{03} \\ k'_{10} & k'_{11} & k'_{12} & k'_{13} \\ k'_{20} & k'_{21} & k'_{22} & k'_{23} \\ k'_{30} & k'_{31} & k'_{32} & k'_{33} \end{bmatrix}$, où H' = [$h'_0$, $h'_1$, $h'_2$, $h'_3$] est la matrice de taille N $\times$ N dont les colonnes correspondent aux vecteurs de réponse impulsionnelle $h'_i$ associés aux canaux de propagation respectifs entre les N antennes 15 de la station de base et le terminal mobile.

Cette matrice de covariance K' n'est pas accessible au terminal mobile, qui n'a pas connaissance des manipulations effectuées par le module de contrôle 42. La matrice K de taille M $\times$ M, estimée par le module 32 du terminal mobile, a pour expression :

$$K = \begin{bmatrix} x & z \\ z^\star & y \end{bmatrix} \qquad (1)$$

où $x = a^H.K'.a$ et $y = b^H.K'.b$ sont des nombres réels positifs et $z = a^H.K'.b$ est un nombre complexe.

Le vecteur propre normalisé g associé à la valeur propre de module maximal de cette matrice K a pour expression :

$$g = \frac{1}{S}\begin{bmatrix} z/x \\ \frac{(y/x)-1}{2} + \sqrt{\left(\frac{(y/x)-1}{2}\right)^2 + \left|\frac{z}{x}\right|^2} \end{bmatrix} = \frac{1}{2S}\begin{bmatrix} 2\lambda_1 \\ \lambda_2 + \sqrt{\lambda_2^2 + \left|2\lambda_1\right|^2} \end{bmatrix} \qquad (2)$$

où S est un facteur de normalisation, $\lambda_1 = z/x$ et $\lambda_2 = (y/x)-1$.

Chaque fois que des données de rétroaction complètes sont retournées par le terminal pour une combinaison (a, b), le module de contrôle 42 de la station de base obtient ainsi la direction du vecteur g donnée par le rapport

$$t = \frac{2\lambda_1}{\lambda_2 + \sqrt{\lambda_2^2 + \left|2\lambda_1\right|^2}}$$ , c'est-à-dire une relation entre les quantités z/x et y/x qui dépendent des composantes de la matrice K'. Cette relation est approchée compte tenu des erreurs d'estimation de la matrice K par le terminal et de la quantification qu'il opère sur le vecteur g avant de le transmettre.

La matrice K' a N(N+1)/2 termes indépendants puisque $k'_{ji} = k'^\star_{ij}$ pour $0 \le i < j < N$. Etant donné que le module 42 doit simplement identifier un vecteur propre de module maximal de K', ces termes peuvent être exprimés proportionnellement à l'un d'entre eux, par exemple $k'_{00}$. Ainsi, (N-1)(N+2)/2 combinaisons (a, b) convenablement choisies permettent au module 42 d'estimer une matrice K'' proportionnelle à K', et donc de calculer son vecteur propre normalisé W associé à la valeur propre de module maximal. Il suffit donc de 9 combinaisons (a, b) quand N = 4.

Il existe de nombreuses manières de choisir ces combinaisons (a, b). De plus, on peut augmenter le nombre de combinaisons et procéder à une estimation de la matrice K'' selon le maximum de vraisemblance. Chaque fois qu'un vecteur g est récupéré par la station de base pour une combinaison de vecteurs de répartition a, b, le module de contrôle 42 peut ainsi mettre à jour la matrice K'' par un calcul d'interpolation, ce qui lui permet de s'adapter plus rapidement aux variations du canal et de réduire l'incidence des erreurs de quantification des vecteurs g par le terminal.

Une possibilité est de prendre, pour $0 \le i < j < N$, deux combinaisons de la forme $a_i = \alpha$ (avec $a_{i'} = 0$ pour $i' \ne$ i) et $b_j = \beta$ (avec $b_{j'} = 0$ pour $j' \ne j$), où $|\alpha|^2 + |\beta|^2 = 1$, $\alpha \ne 0$, $\beta \ne 0$ et $|\alpha| \ne |\beta|$. Les données de rétroaction retournées par le terminal mobile donnent alors une indication de la direction définie par

$$t = \frac{2\frac{\beta}{\alpha} \cdot \frac{k'_{ij}}{k'_{ii}}}{\left|\frac{\beta}{\alpha}\right|^2 \cdot \frac{k'_{jj}}{k'_{ii}} - 1 + \sqrt{\left(\left|\frac{\beta}{\alpha}\right|^2 \cdot \frac{k'_{jj}}{k'_{ii}} - 1\right)^2 + \left|2\frac{\beta}{\alpha} \cdot \frac{k'_{ij}}{k'_{ii}}\right|^2}}$$ . Les deux choix différents du rapport $\beta/\alpha$ permet-

tent alors de calculer les rapports $k'_{jj}/k'_{ii}$ et $k'_{ij}/k'_{ij}$. Pour N = 4, M = 2, neuf combinaisons de ce type permettent de construire la matrice K'' proportionnelle à K' et donc d'estimer les coefficients de pondération $w_0$-$w_3$. Ceux-ci peuvent être obtenus en diagonalisant la matrice K'' ou en sélectionnant un vecteur normalisé W dans un ensemble discret de façon à maximiser $W^H.K''.W$.

La méthode exposée requiert un temps de l'ordre de 9 fois le temps nécessaire à l'acquisition d'un jeu de données de rétroaction, pendant lequel les caractéristiques du canal ne doivent pas trop varier. Elle sera donc appliquée essentiellement à des terminaux mobiles lents. Ceux-ci peuvent être détectés de manière connue par estimation de vitesse sur la base de l'observation des signaux radio reçus par la station de base. La méthode peut aussi être appliquée systématiquement dans des cellules où on sait que les terminaux sont presque toujours statiques ou lents (par exemple à l'intérieur de certains bâtiments).

## Revendications

1. Procédé de contrôle d'émission d'une première station radio ayant N antennes d'émission (15) vers une seconde station radio, N étant un nombre plus grand que 2, comprenant les étapes suivantes :

   - diffuser M signaux de balise (CPICH0, CPICH1) depuis la première station, M étant un nombre plus grand que 1 et plus petit que N, chaque signal de balise étant associé à un vecteur de répartition (a, b) à N composantes et étant appliqué à chacune des N antennes après pondération par une composante correspondante du vecteur de répartition associé ;
   - évaluer la réception des M signaux de balise par la seconde station, pour déterminer des données de rétroaction communiquées à la première station ;
   - faire varier dans le temps les vecteurs de répartition associés aux M signaux de balise ;
   - traiter les données de rétroaction successivement reçues par la première station pour déterminer un coefficient de pondération respectif ($w_0$-$w_3$) pour chacune des N antennes ; et
   - émettre un signal radio dédié depuis la première station à destination de la seconde station, ledit signal dédié étant appliqué à chacune des N antennes d'émission après pondération par le coefficient déterminé pour ladite antenne.

2. Procédé selon la revendication 1, dans lequel le traitement des données de rétroaction comprend une estimation d'une matrice à N lignes et N colonnes à partir de données de rétroaction obtenues pour plusieurs combinaisons de vecteurs de répartition (a, b), le terme situé à la (i+1)-ième et à la (j+1)-ième colonne de ladite matrice, pour $0 \leq i < N$ et $0 \leq j < N$, étant proportionnel à $h'^H_j.h'_i$, où $h'_i$ désigne une réponse impulsionnelle d'un canal de propagation entre la (i+1)-ième antenne d'émission de la première station et la seconde station, et $(.)^H$ désigne le transposé conjugué.

3. Procédé selon la revendication 2, dans lequel le traitement des données de rétroaction comprend le calcul d'un vecteur propre correspondant à une valeur propre de module maximal de ladite matrice à N lignes et N colonnes, les coefficients de pondération respectifs ($w_0$-$w_3$) pour les N antennes étant proportionnels aux composantes dudit vecteur propre.

4. Procédé selon la revendication 2 ou 3, dans lequel ladite matrice à N lignes et N colonnes est estimée sur la base des données de rétroaction obtenues pour (N-1)(N+2)/2 combinaisons distinctes successives de vecteurs de répartition (a, b).

5. Procédé selon l'une quelconque des revendications 2 à 4, dans lequel l'estimation de ladite matrice à N lignes et N colonnes comprend une mise à jour de ladite matrice par interpolation sur la base des données de rétroaction obtenues pour chaque combinaison de vecteurs de répartition (a, b).

6. Procédé selon l'une quelconque des revendications précédentes, dans lequel chaque vecteur de répartition (a, b) associé à un signal de balise (CPICH0, CPICH1) a une seule composante non nulle.

7. Station radio à diversité d'émission en boucle fermée, comprenant N antennes d'émission (15), des moyens de diffusion de M signaux de balise, et des moyens d'émission d'au moins un signal radio dédié à destination d'une station radio distante respective, N et M étant des nombres plus grands que 1, dans laquelle les moyens de diffusion comprennent des moyens (42) pour associer chacun des M signaux de balise à un vecteur de répartition respectif à N composantes (a, b), et des moyens (43) pour appliquer chacun des M signaux de balise à chacune des N antennes après pondération par une composante correspondante du vecteur de répartition associé, et dans laquelle les moyens d'émission du signal radio dédié à destination d'une station radio distante comprennent des moyens (42) de traitement de données de rétroaction reçues de ladite station distante pour déterminer un coefficient de pondération respectif ($w_0$-$w_3$) pour chacune des N antennes, et des moyens (16-20) pour appliquer ledit signal dédié à chacune des N antennes d'émission après pondération par le coefficient déterminé pour ladite antenne,

**caractérisée en ce que** N > M, **en ce que** les moyens de diffusion comprennent en outre des moyens (42) pour faire varier dans le temps les vecteurs de répartition (a, b) associés aux M signaux de balise, et **en ce que** les moyens de traitement (42) sont agencés pour déterminer les coefficients de pondération respectifs pour les N antennes (15) sur la base de données de rétroaction successivement reçues pour des combinaisons différentes de vecteurs de répartition.

8. Station radio selon la revendication 7, dans laquelle les moyens de traitement des données de rétroaction comprennent des moyens (42) d'estimation d'une matrice à N lignes et N colonnes à partir de données de rétroaction obtenues pour plusieurs combinaisons de vecteurs de répartition (a, b), le terme situé à la (i+1)-ième et à la (j+1)-ième colonne de ladite matrice, pour $0 \leq i \leq N$ et $0 \leq j \leq N$, étant proportionnel à $h_j'^H . h_i'$, où $h_i'$ désigne une réponse impulsionnelle d'un canal de propagation entre la (i+1)-ième antenne d'émission et ladite station distante, et $(.)^H$ désigne le transposé conjugué.

9. Station radio selon la revendication 8, dans laquelle les moyens de traitement des données de rétroaction comprennent des moyens (42) de calcul d'un vecteur propre correspondant à une valeur propre de module maximal de ladite matrice à N lignes et N colonnes, les coefficients de pondération respectifs ($w_0$-$w_3$) pour les N antennes étant proportionnels aux composantes dudit vecteur propre.

10. Station radio selon la revendications 8 ou 9, dans lequel les moyens d'estimation de la matrice à N lignes et N colonnes comprennent des moyens d'interpolation pour mettre à jour ladite matrice sur la base des données de rétroaction obtenues pour chaque combinaison de vecteurs de répartition (a, b).

11. Station radio selon l'une quelconque des revendications 7 à 10, dans laquelle chaque vecteur de répartition (a, b) associé à un signal de balise (CPICH0, CPICH1) a une seule composante non nulle.

12. Station radio selon l'une quelconque des revendications 7 à 11, dans laquelle N = 4 et M = 2.

**Claims**

1. A method for controlling the transmission of a first radio station having N transmission antennas (15) to a second radio station, N being a number greater than 2, comprising the following steps:

   - broadcasting M beacon signals (CPICH0, CPICH1) from the first station, M being a number greater than 1 and smaller than N, with each beacon signal being associated with a distribution vector (a,b) with N components and being applied to each of the N antennas after having been weighted by a corresponding component of the associated distribution vector;
   - evaluating the reception of the M beacon signals by the second station, in order to determine feedback data to be sent to the first station;
   - changing over time the distribution vectors associated with the M beacon signals;
   - processing the feedback data successively received by the first station, in order to determine a respective weighting coefficient ($w_0$-$w_3$) for each of the N antennas; and
   - transmitting a dedicated radio signal from the first station to the second station, said dedicated signal being applied to each of the N transmission antennas after having been weighted by the coefficient determined for said antenna.

2. A method according to claim 1, wherein the feedback data processing comprises estimating a matrix with N rows and N columns based on the feedback data obtained for various combinations of distribution vectors (a, b), the element located at the (i+1)-th and the (j+1)-th column of said matrix, for $0 \leq i < N$ and $0 \leq j < N$, being proportional to $h_j'^H . h_i'$, where $h_i'$ refers to an impulse response of a propagation channel between the (i+1)-th transmission antenna of the first station and the second station, and $(.)^H$ refers to the conjugate transpose.

**3.** A method according to claim 2, in which the feedback data processing comprises the calculation of an eigenvector corresponding to an eigenvalue of maximum modulus of said N-row, N-column matrix, the respective weighting coefficients ($w_0$-$w_3$) for the N antennas being proportional to the components of said eigenvector.

**4.** A method according to claim 2 or 3, in which said N-row, N-column matrix is estimated based on the feedback data obtained for (N-1)(N+2)/2 distinct successive combinations of distribution vectors (a, b).

**5.** A method according to one of the claims from 2 to 4, in which estimating said N-row, N-column matrix comprises the updating of said matrix via interpolation, based on the feedback data obtained for each combination of distribution vectors (a, b).

**6.** A method according to one of the preceding claims, in which each distribution vector (a,b) associated with a beacon signal (CPICH0, CPICH1) has a single non-zero component.

**7.** A radio station employing closed-loop diversity transmission, comprising N transmission antennas (15), means for broadcasting M beacon signals, and means for transmitting at least one dedicated radio signal to one respective remote radio station, N and M being numbers greater than 1, in which the means for broadcasting comprise means (42) for associating each of the M beacon signals with a respective distribution vector that has N components (a, b), and means (43) for applying each of the M beacon signals to each of the N antennas after weighting the signals using a corresponding component of the associated distribution vector, and wherein the means for transmitting the dedicated radio signal to a remote radio station comprise means (42) for processing feedback data received from said remote station, in order to determine a respective weighting coefficient ($w_0$-$w_3$) for each of the N antennas, and means (16-20) for applying said dedicated signal to each of the N transmission antennas after weighting them by the detemined coefficient for said antenna, characcterised in that N > M, in that the means for broadcasting further comprise means (42) for changing over time the distribution vectors (a, b) associated with the M beacon signals, and in that the processing means (42) are adapted to determine the respective weighting coefficients for different combinations of distribution vectors.

**8.** A radio station according to claim 7, in which the feedback data processing means comprises means (42) for estimating an N-row, N-column matrix based on feedback data obtained for multiple combinations of distribution vectors (a,b), the element located at the (i+1)-th and (j+1)-th the column of said matrix for $0 \leq i < N$ and $0 \leq j < N$, being proportional to $\mathbf{h'}_j{}^H . \mathbf{h'}_i$, where $h'_i$ refers to an impulse response of a propagation channel between the (i+1)-th transmission antenna of the transmitting station and said remote station, and $(.)^H$ refers to the conjugate transpose.

**9.** A radio station according to claim 8, in which the feedback data processing means comprise means (42) for calculating an eigenvector corresponding to an eigenvalue of maximum modulus of said N-row, N-column matrix, the respective weighting coefficients ($w_0$-$w_3$) for the N antennas being proportional to the components of said eigenvector.

**10.** A radio station according to claim 8 or 9, in which the means for estimating the N-row, N-column matrix comprise inteprolation means for updating the matrix based on feedback data obtained for each combination of the distribution vectors (a, b).

**11.** A radio station according to any one of claims 7 to 10, in which each distribution vector (a, b) associated with a beacon signal (CPICH0, CPICH1) has a single nonzero component.

**12.** A radio station according to any one of claims 7 to 11, in which N = 4 and M =2.

**Patentansprüche**

**1.** Verfahren zur Steuerung des Sendens von einer ersten Funksfation mit N Sendenantennen (15) zu einer zweiten Funkstation, wobei N eine Zahl größ als 2 ist und das Verfahren die folgenden Schritte einschließt:

- Ausstrahlung von M Backensignalen (CPICH0, CPICH11) von der ersten Station aus, wobei M eine Zahl größer als 1 und kleiner als N ist, wobei jedes Bakensignal mit einem Verteilungsvektor (a, b) mit N Komponenten verknüpft ist und auf jede der N Antennen Verteilungsvektors;

- Bewertung des Empfangs der M Bakensignale durch die zweite Station, um die Rückkopplungsdaten zu bestimmen, die der ersten und Station mitgeteilt werden;
- zeitliches Verändern der Verteilungsvektoren, die mit den M Bakensignalen verknüpft sind;
- Verarbeitung der Rückkopplungsdaten, die nacheinander von der ersten Station empfangen werden, um einen jeweiligen Wichtungsfaktor ($w_0$-$w_3$) für jede der N Antennen zu bestimmen; und

- Senden eines dedizierten Funksignals von der ersten Station aus für die zweite Station, wobei dieses dediziete Signal auf jede der N Sendeantennen nach Wichtung durch den für

2. Verfahren gemäß Anspruch 1, bei dem die Verarbeitung der Rückkopplungsdaten eine Bewertung einer Matrix mit N Zeilen und N Spalten einschließt, ausgehend von Rückkopplungsdaten, die für mehrere Kombinationen von Verteilungsvektoren (a, b) gewonnen wurden, wobei der Term, der an der (i+1)ten und an der (j+1)ten Spalte dieser Matrix sitzt für $0 \leq i < N$ und $0 \leq j < N$ proportional ist zu $h_j'^H . h_i'$ wobei $h_i'$ eine Implusantwort eines Ausbreitungs-kanals zwischen der (i+1)ten Sendeantenne der ersten Station und der zweiten Station bezeichnet, und wobei $(.)^H$ die Konjugierte Transponierte bezeichnet.

3. Verfahren gemäß Anspruch 2, bei dem die Verarbeitung der Rückkopplungsdaten die Berechnung eines Eigenvektors einschließt, der einem Eigenwert Maximalmodul dieser Matrix mit N Zeilen und N Spalten entspricht, wobei die jeweiligen Wichtungsfaktoren ($w_0$-$w_3$) für die N Antennen proportional zu den Komponenten dieses Eigenvektors sind.

4. Verfahren gemäß Anspruch 2 oder 3, bei dem diese Matrix mit N Zeilen und N Spalten auf der Grundlage der Rückkopplungsdaten bewertet wird, die für (N-1)(N+2)/2 aufeinander folgende verschiedene Kombinationen von Verteilungsvektoren (a, b) gewonnen wurden.

5. Verfahren gemäß einem der Ansprüche 2 bis 4, bei dem die Bewetung dieser Matrix mit N Zeilen und N Spalten eine Aktualisierung dieser Matrix durch Interpolation auf der Grundlage der Rückkopplungsdaten einschließt, die für jede Kombination von Verteilungsvektoren (a, b) gewonnen wurden.

6. Verfahren gemäß einem der vorstehenden Ansprüche, bei dem jeder Verteilungsvektor (a, b), der mit einem Bakensignal verknüpft ist (CPICH0, CPICH1), eine einzige Komponente ungleich Null hat.

7. Funkstation mit Diversity-Senden im geschlossenen Regelkreis, beinhltend N Sendeantennen (15), Mittel zum Ausstrahlen von M Bakensignalen und Mittel zum Senden von mindestens einem dedizierten Funksignal zu einer betreffenden Funk-Fernstation, wobei N und M Zahlen größer als 1 sind,
bei der die Mittel sur Ausstrahlung Mittel (42) einschließen, um jedes der M Bakensignale mit einem betreffenden Verteilungsvektor mit N Komponenten (a, b) zu verknüpfen, und Mittel (43), um jedes der M Bakensignale auf jede der N Antennen anzuwenden, nach Wichtung durch eine entsprechende Komponente des zugehörigen Verteilungsvektors,
und bei der die Mittel zum Senden des dedizierten Funksignals zu einer Funk-Fernstation Mittel (42) zur Verarbeitung von Rückkopplungsdaten einschließen, die von dieser Fernstation empfangen wurden, um einen jeweiligen Wich-tungsfaktor ($w_0$-$w_3$) für jede der N Antennen zu bestimmen, und Mittel (16-20), um dieses dedizierte Signal auf jede der N Sendeantennen nach Wichtung durch den für diese Antenne bestimmten Faktor anzuwenden,
**dadurch gekennzeichnet, dass** N > M, dass die Mittel zur Ausstrahlung außerdem Mittel (42) einschließen, um zeitlich die Verteilungsvektoren (a, b), die mit den M Bakensignalen verknüpft sind, zu verändern, und **dadurch gekennzeichnet, dass** die Mittel zur Verabeitung (42) so aufgebaut sind, dass die jeweiligen Wichtungsfaktoren für die N Antennen (15) auf der Grundlage von Rückkopplungsdaten bestimmt werden, die nacheinander für verschiedene Kombinationen von Verteilungsvektoren empfangen wurden

8. Funkstation gemäß Anspruch 7, bei der die Mittel zur Verarbeitung der Rückkopplungsdaten Mittel (42) sur Bewertung einer Matrix mit N Zeilen und N Spalten auf der Grundlage von Rückkopplungsdaten einschließen, die für mehrere Kombinationen von Verteilungsvektoren (a, b) gewonnen wurden, wobei der Term, der an der (i+1)ten und an der (j+1)ten Spalte dieser Matrix sitzt für $0 \leq i < N$ und $0 \leq j < N$ proportional ist zu $h_j'^H . h_i'$

wobei h'$_i$ eine Impulsantwort eines Ausbreitungskanals zwischen der (i+1)ten Sendeantenne und dieser Fernstation bezeichnet, und wobei (.)$^H$ die konjugierte Transponierte bezeichnet.

9. Funkstation gemäß Anspruch 8, bei der die Mittel zur Verabeitung der Rückkopplungsdaten Mittel (42) zur Berechnung eines Eigenvektors einschließen, der einem Eigenwert Maximalmodul dieser Matrix mit N Zeiten und N Spalten entspricht, wobei die jeweiligen Wichtungsfaktoren (w$_0$-w$_3$) für die N Antennen proportional zu den Komponenten dieses Eigenvektors sind.

10. Funkstation gemäß Anspruch 8 oder 9, bei der die Mittel sur Bewertung der Matrix mit N Zeilen und N Spalten Mittel zur Interpolation einschließen, um diese Matrix auf der Grundlage der Rückkopplungsdaten zu aktualisieren, die man für jede Kombination der Verteilungsvektoren (a, b) gewonnen hat.

11. Funkstation gemäß einem der Ansprüche 7 bis 10, bei der jeder Verteilungsvektor (a, b), der mit einem Bakensignal verknüpft ist (CPICH0, CPICH1), eine einzige Komponente ungleichj Null hat.

12. Funkstation gemäß einem der Ansprüche 7 bis 11, bei der N = 4 une M = 2.

FIG.1

EP 1 280 286 B1

FIG.2